# EUROPEAN PATENT APPLICATION

(11) **EP 4 718 212 A1**
(43) Date of publication of application: **01.04.2026**
(21) Application number: 24203748.9
(22) Date of filing: 30.09.2024
(51) Int. Cl.: G06F 3/01, G06F 3/0485

(54) **USER-INTERFACE WITH OPTION-CONTROL ELEMENTS THAT CHANGE THEIR APPEARANCE DURING WAITING TIME**

(30) Priority: 26.09.2024 EP 24202833
(71) Applicant: Treye IT UG (haftungsbeschränkt), 68163 Mannheim (DE)
(72) Inventor: WACHNER, Anton, 68163 Mannheim (DE)
(74) Representative: Fleuchaus & Gallo Partnerschaft mbB

(57) **Abstract**

To receive an input from a user, a user-interface in a first operational state monitors intentional motion of the user and positions a pointer (220-1) on a display (200, 200-A). Upon detecting a pre-defined stop pattern, the user-interface keeps the pointer at the current position of a function-control element (210) and assumes a second operational state. The user-interface presents option-control elements (241-1, 242-1) on the display (200-B-1, 200-B-2), and continues monitoring. Simultaneously, the user-interface indicates - by changing the appearance of the option-control elements (241-2, 242-2) - that the time-out of a validity time interval is approaching. Upon detecting a cancelation-pattern or upon detecting time-out, the user-interface returns to the first operational state, otherwise it takes indications of the user to the option-control elements as the confirmation to perform the particular function of the function-control element (210).

## Description

### Technical Field

The disclosure relates to systems for facilitating interaction between humans and computers, and more in particular, relates to methods, systems, and computer programs to receive input from a user.

### Background

For many applications, human users interact with computers through user-interfaces. From a high-level perspective, user-interfaces for computers comprise modules to forward information to the user (e.g., output devices, such as displays for visible communication, speakers for audible communication), and comprise modules to receive information from the user (e.g., input devices, such as keyboards, mouses or other pointing devices, microphones and so on). Touch-screens combine both information directions into a single device.

Input devices often convert physical movements of the user into computer-readable signals.

Receiving information from the user is often associated with a selection and with a confirmation. For example, in the well-known application to enter text with ABC...XYZ characters to the computer, the user moves a finger over a particular key on a keyboard. The user thereby selects one key from many other keys. The user then presses that particular key and thereby confirms the selection. The user can also move to a different key, or can disregard or cancel the selection. Upon confirmation, the computer performs the selected function (or action), in the example to add the selected and confirmed character to a text.

It is noted that moving fingers over the keyboard and moving a finger to press a key are movements in different directions and planes.

Keyboards or other hardware input devices can be visualized on the display. The user would change the position of a pointer (on the display) by physically moving a pointing device and would press (or "click") a key of that pointing device. The underlying principle to select and to confirm (or to cancel) remains the same. The computer performs the function upon receiving the confirmation.

Displays can show control elements such as icons, and some icons that have their hardware equivalent only in metaphors. The user can position the pointer to a "recycle bin" icon or to a "switch off" icon to select a sub-function (or follow-up function: to delete data, or to shut down the computer), but the user would have to confirm the function first.

Receiving the confirmation (or cancellation) by the computer can also be regarded as receiving a trigger that represents the intent of the user (i.e., to confirm or to cancel).

However, not every user is able to interact with the computer in such a way, due to restrictions in physical movements, physical impairments, or the like. The mentioned different directions and planes are not easily transferable to displays (that have a single plane only). The restrictions may potentially make selection and confirmation more difficult. But computer interfaces can offer a wide variety of further functions to accommodate the restrictions.

For example, interfaces may monitor the user moving. Such interfaces use hardware devices such as cameras (to track the physical positions or viewing direction of the eyes, the position of the nose, "gazing" in common terms), accelerometers (to track movement of arms or legs, etc.), microphones (to recognize spoken commands) and so on. Such interfaces are usually software-controlled.

However, despite such improvements in the interfaces, differentiating between pointing (i.e., selecting) and confirming (or cancelling) is still loaded to the user. A user may be able to let a pointer reach a particular position on the display (e.g., a particular visualized key), but the user may not be able to communicate the confirmation (or cancellation).

In the scientific community, such and other restrictions are discussed, for example, as the so-called "Midas Touch Problem": Some people are challenged in interacting with a computer if they are not able to control the mouse. There are different ways of moving or placing the pointer (e.g., cursor), using a joystick or an eye-tracking device. However, selecting a control element by clicking is challenging as it requires a further input mechanism. Traditionally, a dwell time (or waiting time interval) is used. Any time the pointer stops moving, the confirmation (that would be the "click" otherwise) is executed after a predefined time interval unless the pointer moves again during the waiting time interval. As a consequence, "confirmation" (by the computer but not by the user) is inevitable. In case of short time intervals, more unintentional confirmations occur while the user is actually just looking for and identifying the position of the next letter.

However, the waiting time of longer intervals delays the interaction between user and computer. For example, a user who writes a text in the computer has to wait for every letter.

### Summary

According to embodiments of the present invention, a solution is presented that addresses the waiting time interval. The user is enabled to interrupt waiting at any time. Further, dwell does not lead to a confirmation and allows resting on a position without unintentional confirmation.

The disclosed computer-implemented method is a method that relates to the operation of a user-interface (of a computer). There is an overall goal to receive an input from a user. The input is related to a pre-defined function that the computer has to execute.

In a first state, in first repetitions (such as by execution in a first loop), the user-interface is monitoring the intentional motion of at least one body part of the user. The user performs intentional motion according to one or more control patterns of a first type. The user-interface is positioning a pointer on a display of the computer according to a detected control pattern. Upon detecting a pre-defined particular stop control pattern of the first type, the user-interface stops positioning the pointer at the current position on a particular function-control element on the display, and the user-interface assumes a second state (i.e., changes the operation to the second state).

In the second state, the user-interface is presenting a set of at least one option-control element on the display. In second repetitions (such as by execution in a second loop), the user-interface is further monitoring the intentional motion of the at least one body part of the user. The user performs intentional motion according to two or more control patterns of a second type. The control patterns of the second type comprise at least one option-pattern and comprise a cancellation-pattern.

Simultaneously with monitoring, the user-interface is indicating to the user that the time-out of a validity time interval is approaching. Upon detecting the cancelation-pattern or upon detecting time-out (two alternative conditions to be checked), the user-interface is returning to the first state. The second repetitions stop upon detecting one of the option-patterns, and the user-interfaces triggers the computer to start executing the pre-defined function. Detecting an option is detecting the confirmation, and detecting cancellation is detecting cancellation.

Optionally, the computer executes monitoring and further monitoring by monitoring gestures of the user. The user performs the gestures by moving the head, moving the eyes, or moving the nose or other parts of the face.

Optionally, the computer executes at least one of the monitoring steps by processing signals from a sensor. The following alternatives (or implementation options) apply: (i) monitoring motion of the head by a camera sensor and image processing of the nose area of the head; (ii) image processing the movement of the head or image processing individual facial features; (iii) monitoring motion of the eyes by the camera sensor and image processing of the image of the eyes; (iv) monitoring motion of the head by an accelerometer sensor; and (v) monitoring motion of a body part that operates a switch sensor.

Optionally, positioning the pointer on the display is selected from pixel-by-pixel positioning, and icon-by-icon positioning. The choice between "pixel-by-pixel" and "icon-by-icon" is dictated by the type of sensor.

Optionally, in the second state, the computer is indicating that the time-out is approaching by changing the optical appearance of the option-control elements on the display. The optical appearance of the option-control elements is related to the remaining time such that the size of the option-control elements on the display is being changed.

Optionally, changing the appearance of the option-control elements comprises, selected from the following: gradually changing the size by reducing the size, gradually changing the color, and gradually changing the brightness.

Optionally, in the second state, the computer is indicating that the time-out is approaching by providing an acoustical signal to the user. With the process of time, the acoustical signal changes selected from the following: a signal that changes its audible frequency (or pitch), and a signal with two pulses that change a pause time between the pulses.

Optionally, upon detecting a confirmation pattern, the computer is executing the pre-defined function according to the particular option-patterns that has been detected. For two options, the computer can perform the pre-defined function that has its equivalent to a left-side mouse-key operation and/or has its equivalent to a right-side-mouse-key operation.

Optionally, the validity time interval has up to N variants (i.e., variants in the number of options, or less variants). Indicating that time-out is approaching is executed separately for the variants. Wherein upon reaching a time-out for a particular variant, the computer stops presenting the control element for the particular variant but continues with further monitoring and indicating the remaining time for the other variants.

Optionally, the execution of the method is repeated conditionally as follows: If the pointer remains at the current position on the particular function-control element on the display, the computer continues in the second state with further monitoring. Else, the computer continues in the first state with monitoring.

Optionally, in repetitions of the method, the option-control elements are provided at a same location on the display irrespective of the pointer.

Optionally, in the first state, the computer is monitoring the motion of the user by evaluating signals from a pointing device that is moved in physical contact by the user.

A computer program product that - when loaded into a memory of a computer and being executed by at least one processor of the computer - causes the computer to execute the steps of the computer-implemented method.

A computer has a user-interface that is adapted to receive an input from a user. The input is related to a pre-defined function for the computer to execute, and the computer is adapted to execute the method steps of the computer-implemented method.

### Brief Description of the Drawings

FIG. 1 illustrates a computer and its user, wherein the computer comprises a user-interface and a function module;
FIG. 2 illustrates first, second and third operation states of the user-interface;
FIG. 3 illustrates a flow chart of a computer-implemented method to operate a user-interface of a computer, to receive an input from a user, wherein the input is related to a pre-defined function for the computer to execute;
FIG. 4 illustrates the flow chart in a detail, with executing the function according to one of a confirmed option;
FIG. 5 illustrates the flow chart of the computer-implemented method of FIG. 3 with method repetitions in two alternatives;
FIG. 6 illustrates a comparison between a traditional approach (left side) and executing the method (right side) for an application by that the computer receives input as consecutive letters of a text, with indicating time intervals between "key stroke" actions;
FIG. 7 illustrates positioning a pointer on a display in two variants, and
FIG. 8 illustrates a generic computer.

### Detailed Description

### Introduction and wording convention

To describe user-computer interaction (i.e., to describe a human machine interface, or HMI), the description applies the term "execute" for activities by a computer, and applies the term "perform" for activities by a user of the computer.

This interaction allows human users to instruct computers to execute a pre-defined function. The function can belong to an overall activity. For example, for the activity "writing a text", the computer executes a text processing program, and the user operates interface elements that are associated with particular characters (e.g., letter keys in QWERTY arrangement). With each repetition of the function, the text gets longer. For some characters, the function may have to be repeated. For example, in the German word WETTER, the character T has to be entered in a repetition, the character E has to be entered at two different occasions, but not in a repetition.

The user performs intentional motion of at least one body part. The user has the intention to communicate with the computer. Sensors can detect such motions, for example:
- As already mentioned, hardware devices such as cameras can track the physical position or the viewing direction of the eyes (of the user, eye-gazing or eye-tracking technologies), the physical position of the nose (in relation to the camera), the physical position of the tongue (inside the mouth), and so on.
- Accelerometers can track motion of arms or legs, fingers, the head, etc..
- Microphones can recognize spoken commands of the user.

Sensors that are sensitive to multi-variate phenomena can detect intentional motion, by using other approaches, such as to detect particular breathing patterns.

As every human being, the user shows non-intentional motions as well: the heart beats, the body moves wiles breathing, the eyes are blinking. Or in some cases, arms or legs may show a tremor.

Sensors (and computer programs in the computer) that differentiate intentional from non-intentional motion are well-known in the art. Some of the intentional motion serves a control pattern. It is noted that gesture recognition techniques are available as well.

While intentional motion with control patterns is recognizable by state-of-the-art techniques, the computer-implemented method uses some semantics of the these control pattern in a particular way.

### System overview

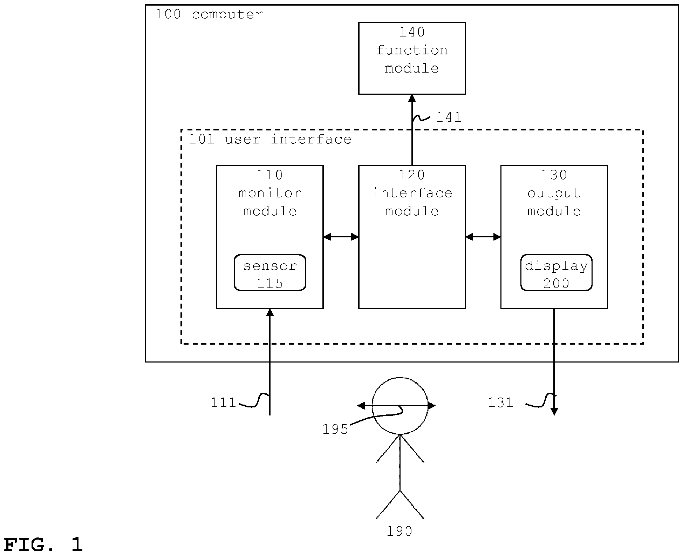

FIG. 1 illustrates computer 100 and user 190. Computer 100 comprises user-interface 101 (dashed box) and function module 140.

According to input 141 from user 190, function module 140 executes a pre-defined function. Alternatively, in case that input 141 is a cancellation, function module 140 may not execute the function.

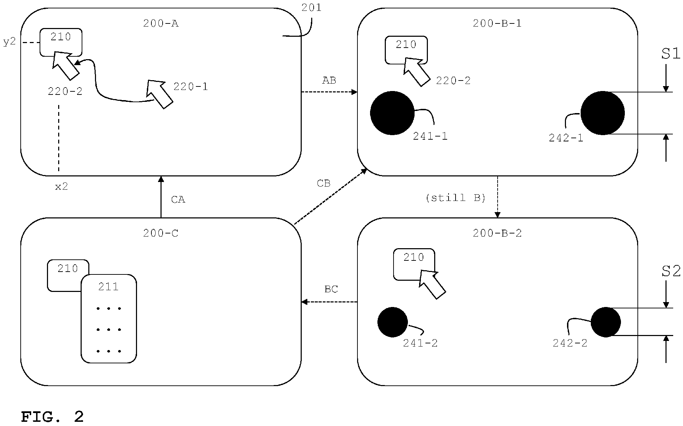

As computers execute many different functions, only some examples can be given:
- In a text editing function, the input relates to adding characters to a text, or to removing characters from a text.
- Activating applications to be executed on the computer is a prominent example, for icons on the desktop. Usually, (double)-clicking on one of the icons starts the application. There are icons to open a program, icons to show a directory, icons to open a file, and so on.
- Deactivating an application so that the computer stops executing it is the opposite of activating. In many cases, such function can be triggered by operating an X-symbol.
- Displaying a menu is a function that offer multiple further functions (cf. FIG. 2, item 211). Displaying a menu can be related to recycle bin functions, such as showing the content of the recycle directory, offering to delete content, etc.

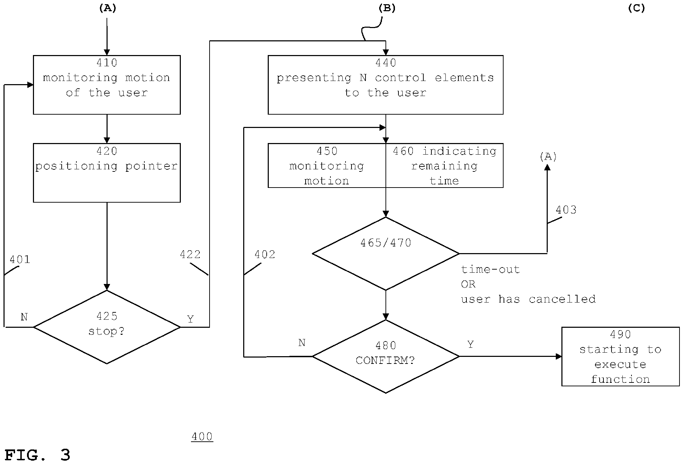

As illustrated, computer 100 has further modules 110, 120, 130 that are adapted for the following:
- Sensor module 110 executes method steps "monitoring" (cf. FIG. 3, 410 and 450). Thereby, sensor module 110 monitors the intentional motion of at least one body part of user 190 who performs intentional motion according to control patterns of first or second types (i.e., monitoring while the user performs the motion). The patterns are symbolized by an arrow 111 in the direction from user 190. Sensor module 110 receives user-related data via sensor 115 (that has been discussed already). There is no need that user 190 is in physical contact with sensor 115. In other words, sensor 115 operates remotely from user 190. Sensor module 110 is able to differentiate particular user motion with particular control patterns, and is able to differentiate between pattern types. The skilled person is familiar with recognizing control patterns. For example, control patterns can be associated with particular directions (e.g., user motion corresponding to pointer movements on a display), can be so-called neutral positions, and other positions.
- Display module 130 participates in method steps that are directed to convey information 131 to user 190. This is symbolized by an arrow in the direction to the user. Information 131 can be conveyed to user 190 as control elements on display 200. Computer 100 can use display 200 otherwise, such as when executing the function.
- Interface module 120 coordinates the execution of the method steps. The interaction with the other modules is illustrated by arrows (i.e., data to and from sensor module 110, data to and from display module 130 and data to function module 140).

The figure is simplified in illustrating intentional motion by user 190 only symbolically: the head of the user is shown with bidirectional arrow 195, but other parts of the body can perform intentional motion as well.

### Operation states

FIG. 2 illustrates first, second and third operation states of user-interface 101. The states are shown for display module 130 that has display 200 (cf. FIG. 1). The states are illustrated clockwise
- A (upper left, as display 200-A),
- B (upper right as display 200-B-1 and below right as display 200-B-2), and
- C (below left, as display 200-C).

Consecutive state transitions are given as
- a transition from state A to state B (arrow AB),
- a transition from state B to state C (arrow BC), and
- a transition from state C to state A (arrow CA).

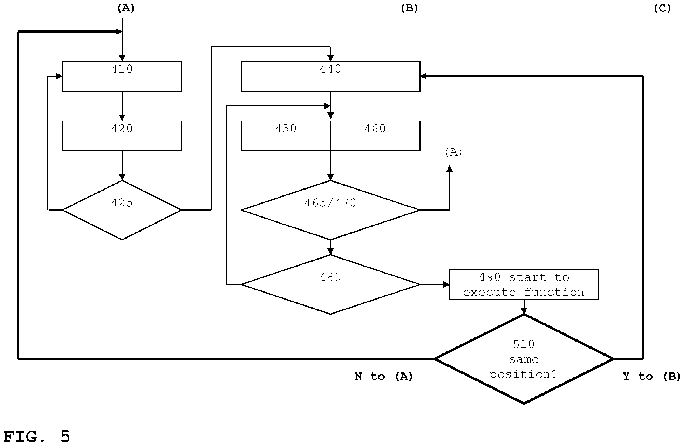

An optional transition from state C to state B bypasses some method steps when the method is repeated partially (details in FIG. 5).

Within a state, the progress of time is illustrated with numeric suffices to the references (e.g., -1, -2). The suffice also indicate different points in time (i.e., initially -1, later -2).

Function-control element 210 is a user-interface element on display 200 that indicates to user 190 that the computer can execute a particular function.

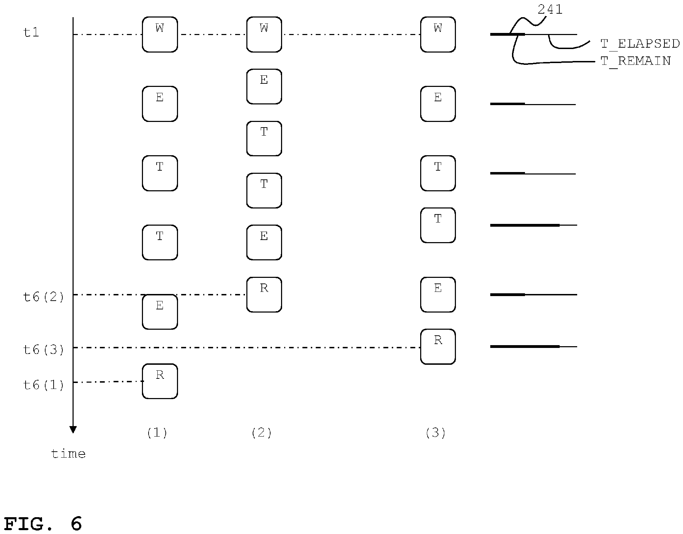

Control elements on displays are well-known, and the following gives some examples:
- As in the example of FIG. 2, function-control element 210 can be a recycle bin icon that leads to a directory with content that is a candidate to be permanently deleted from the computer. The function in execution is given on display 200-C, with menu 211 that presents sub-functions (e.g., offering to delete content, offering to show a list of the content to the user, etc.).
- In a further example (cf. FIGS. 6-7), function-control element 210 can be an icon for a particular character of a keyboard that is emulated on the display. For the Latin alphabet, there would be at least 26 such elements.

Area 201 can be the so-called desktop area of display 200 that also offers functions. Although for modern computers each and every pixel on the display seems to be associated with a function, in implementations, some areas may not be associated with a function.

First operational state A is symbolized with display 200-A. User-interface (101, in FIG. 1, with sensor module 110) is monitoring (cf. step 410 in FIG. 3) the intentional motion of at least one body part of the user (190 in FIG. 1) who performs intentional motion according to control patterns of a first type.

For example, the user would intentionally move the eyes and the sensor (115 in FIG. 1) would detect eye movement as a control pattern (of a first type). The display module (130 in FIG. 1) starts to position pointer 220-1 on display 200-A according to the detected control pattern. In the example, pointer 220-1 would then move to position x2, y2 that is just over function-control element 210 and would rest there (i.e., indicated as pointer 220-2).

Monitoring the user and positioning the pointer is repeated in first repetitions (cf. line 401 in FIG. 3).

In other words, upon detecting a pre-defined particular stop control pattern of the first type, the computer stops positioning pointer 220-2 at the current position (e.g., at the coordinates x2, y2) on a particular function-control element 210 on display 200-A. In implementations, the computer detects a neutral position (of the user) and the pre-defined semantic for that neutral position can be to "stop positioning".

The computer then assumes a second operational state B, that is exclusive to state A. FIG. 2 illustrates state B by displays 200-B-1 and 200-B-2. In state B, pointer 220-2 remains at the current position x2, y2. In other words, the pointer remains "frozen".

Display 200-B presents (step 440 in FIG. 3) a set of N option-control elements on display (200-B-1, 200-B-2) to the user. Presenting the option-control elements starts the time interval T_DELTA. In the example of FIG. 2, there are N = 2 option-control elements (for two options):
- option-control element 241 (on the left side), and
- option-control element 242 (on the right side).

The progress of time is indicated in that element 241-1 turns into element 241-2, and that element 242-1 turns into element 242-2. Having N = 2 option-control elements offers two options: "to the left" and "to the right". The options are similar to left-clicks and right-clicks with a mouse.

The option-control elements also indicate a remaining time T_REMAIN = T_DELTA - T_ELAPSED until the computer executes the pre-defined function (unless it detects user activity). Time-out corresponds to T_ELAPSED = T_DELTA.

In other words, option-control elements have a dual purpose:
- By being positioned separately, the elements indicate that options (to execute the functions) exist, for example N = 2 options.
- By changing the visual appearance during T_DELTA (i.e., counting down T_REMAIN), the elements indicate that a time-out of the validity of T_DELTA is approaching.

In second repetitions (cf. line 402 in FIG. 3), the computer is monitoring (step 450) the motion of the (at least one body) part of user 190 who performs intentional motion according to control patterns of a second type.

The control patterns of the second type comprise N ≥ 1 option-patterns and a cancellation-pattern. In the example, there are N = 2 option-patterns that correspond to the option-control elements. Simultaneously with monitoring, the computer is indicating 460 to the user 190 that time-out of a validity time interval (T_DELTA, T_REMAIN) is approaching. By way of example, FIG. 2 shows two time-points. In display 200-B-1 (the state has just switched from A to B), the validity time interval remains in full, the circles for elements 241-1 and 242-1 have sizes S1 (i.e., diameters), and in display 200-B-2 (state B is still valid), the circles for elements 241-2 and 241-2 have been reduced to size S2.

During the validity time interval T_DELTA, the user can input to the computer the following:
- the intention to confirm at least one option (e.g., N = 2 options, to the left, to the right)
- the intention to cancel any input.

The skilled person is able to assign the control pattern to these semantics. For example, the control pattern to move the head to the left (or to the right) belongs to the confirmation of an option, and the control pattern with the head shaking belongs to the cancellation. It is noted that the control patterns can be specific to the abilities of the user. For example, alternative control patterns can be detected as the using moving the eyes to the left or to the right.

The second repetitions stop upon detecting (470) the cancelation-pattern (i.e., the user motion corresponds to the cancellation-pattern) or upon detecting time-out (465), with returning to the first state (A).

The second repetitions also stop upon detecting one of the option-patterns, with executing the pre-defined function (cf. step 490 in FIG. 3).

State C corresponds to the execution of the function. In the example for the recycle bin, the user would have selected the "option to the right" and display 200-C would show menu 211 (with further sub-functions).

### Format of the option-control elements

FIG. 2 symbolizes option-control elements 241 and 242 by disks of varying diameters (e.g., • colored circles). Other visualization can be applied, and the format can be selected such the user notes that the time-out of a validity time interval is approaching.

The following examples are merely provided for explanation:
- The option-control elements can have geometrical shapes such as, for example, circles, full circles (i.e., disks as illustrated), triangles, squares, hexagons.
- The progress of time can be indicated by option-control elements that become smaller (as in FIG. 2, 241-1 and 242-1 larger, 241-2 and 242-2 smaller). Getting smaller is related to the concept of having less time (i.e., T_REMAIN decreases).
- The option-control elements can also be implemented by numerical digits, as a countdown indicator: 5, 4, 3, 2, 1 and zero (one digit difference standing for a pre-defined interval, such as the 10th of a second).
- A combination is possible to use 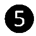 , digits on colored background (not only black), and count down 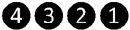 .
- The option-control elements can be implemented as a progress bar (with an example in FIG. 6), with - optionally - showing the remaining time T_REMAIN and the elapsed time T_ELAPSED by different thickness (or color) of the bar. In that sense, the progress bar would be a "negative" progress bar: T_DELTA = T_REMAIN + T_ELAPSED.
- The option-control elements can be implemented to show the progress of time by changing the color of the screen. For example, the screen may gradually turn from "all colors" to "black and white" only. Changing the color is potentially suitable for N = 1.
- The option-control elements themselves can change the color.

### Method

FIG. 3 illustrates flow chart of computer-implemented method 400 to operate user-interface 101 of computer 100, to receive input 141 from user 190, wherein input 141 is related to a pre-defined function for the computer to execute.

In a first state (A), in first repetitions 401, the user-interface is monitoring 410 the intentional motion of at least one body part of the user who performs intentional motion according to one or more control patterns of a first type. The user-interface is positioning 420 a pointer (cf. item 220-1) on a display of the computer according to a detected control pattern.

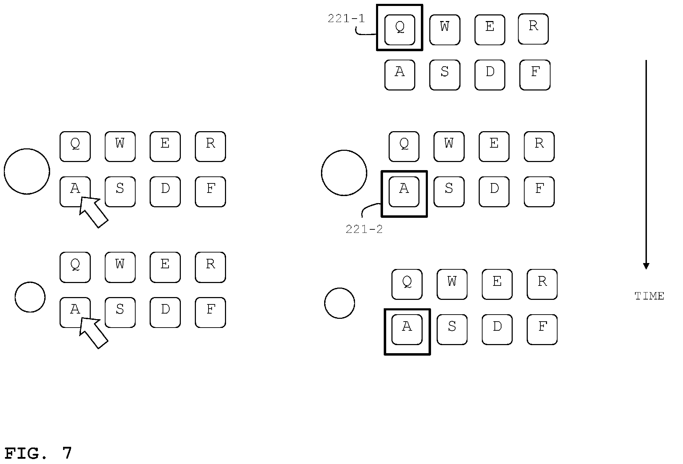

Upon detecting 425 a pre-defined particular stop control pattern of the first type, the user-interfaces stops 422 positioning the pointer at the current position (e.g., x2, y2 in FIG. 2, also FIG. 7) on a particular function-control element on the display and assumes a second state (B).

in the second state (B), the user-interface is presenting 440 a set of N ≥ 1 option-control elements (cf. items 241-1/241-2, 242-1/242-2) on the display. In second repetitions 402, the user-interface is further monitoring 450 the intentional motion of the at least one body part of the user (who performs intentional motion according to two or more control patterns of a second type). The control patterns of the second type comprise N ≥ 1 option-patterns and comprise a cancellation-pattern.

Simultaneously with monitoring 450, the user-interface is indicating 460 to the user that the time-out of a validity time interval (i.e., T_DELTA) is approaching.

Upon detecting 470 the cancelation-pattern or upon detecting time-out 465, the user-interface is returning 403 to the first state (A).

The second repetitions 402 stop upon detecting 480 one of the option-patterns, and the method continues with starting 490 to execute the pre-defined function (cf. FIG. 1, input 141 acts as a trigger, triggering the execution).

Although illustrated separately, the detecting steps 465, 470 and 480 are performed in parallel.

FIG. 3 also illustrates a computer program or a computer program product with functional blocks of user-interface 101 (cf. FIG. 1): blocks 410 and 450 for monitoring motion, block 420 for positioning the pointer, block 440 for presenting the control elements, block 460 for indicating T_REMAIN, block 490 to communicate the start trigger to function module 140 (cf. input 141 acting as trigger, in FIG. 1). The diamond-shaped blocks 425, 465/470, 480 as well as lines 401, 402, 403, 422, etc. can be implemented accordingly.

The computer program product - when loaded into a memory of a computer and being executed by at least one processor of the computer - causes the computer to execute the method.

### Options for the method

The computer can execute monitoring 410 and further monitoring 450 by monitoring gestures of the user that the user performs by moving the head, moving the eyes, or moving the nose, or doing other movements.

The computer can execute at least one of the monitoring steps 410, 450 by processing signals from the sensor, with the following alternatives: (i) monitoring motion of the head by a camera sensor and image processing of the nose area of the head; (ii) monitoring motion of the eyes by the camera sensor and image processing of the image of the eyes; (iii) monitoring motion of the head by an accelerometer sensor; and (iv) monitoring motion of a body part that operates a switch sensor (cf. FIG. 7 for further details).

Positioning 420 the pointer on the display is selected from pixel-by-pixel positioning (cf. FIG. 2), and icon-by-icon positioning (cf. FIG. 7).

In the second state (B), the computer can indicate 460 that the time-out is approaching by changing the optical appearance of the N option-control elements. The optical appearance of the N option-control elements is related to the remaining time (T_REMAIN) such that the size of the option-control elements on the display is being changed (cf. the example in FIG. 2 with the larger and smaller disk symbols).

Changing the appearance of the N option-control elements (241, 242) can be implemented, for example, by gradually changing the size by reducing the size, gradually changing the color, and gradually changing the brightness. The skilled person can apply further implementations.

In the second state (B), the computer can indicate 460 that the time-out is approaching by providing an acoustical signal to the user. With process of time, the acoustical signal can change, for example, as a signal that changes its audible frequency (or pitch), as a signal with two sound pulses that change a pause time between the pulses, in combinations. Music composers can find further conventions, and can tailor the signals to the cognitive abilities of the user.

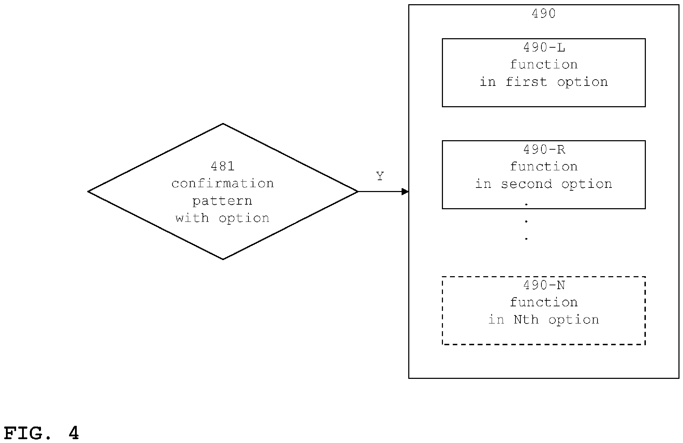

Upon detecting a confirmation pattern, the computer can execute the pre-defined function according to the particular option-patterns that has been detected (cf. the example with the menu in FIG. 2, options discussed with FIG. 4, the pre-defined function with equivalent to left-side mouse-key and/or equivalent to right-side-mouse-key operations).

The validity time interval T_DELTA can have N or less variants. Indicating 460 that the time-out is approaching can be executed separately for the variants. Upon reaching a time-out for a particular variant, the computer can stop presenting 440 the control element for the particular variant but can continue with further monitoring 450 and indicating 460 the remaining time for the other variants.

With details to be explained with FIG. 5, the execution of method 400 can be repeated conditionally. For example, if the pointer remains at the current position on the particular function-control element on the display, continuing in the second state (B) with further monitoring 440, or else continuing in the first state (A) with monitoring 410.

The control elements on the display can have different display positions. For example, the recycle bin icon can be located on the left side above, the icon to change the calendar data diagonal opposite on the right side below. But in repetitions of method 400, the option-control elements can be provided at a same location on the display irrespective of the pointer.

Monitoring 410 the motion of the user can comprise evaluating signals from a pointing device that is moved in physical contact by the user. In other words, if the user can operate a mouse (or similar hand-operated device), the method can still be executed and can provide assistance for the user.

### Distinguishing options

FIG. 4 illustrates the flow chart in detail, with executing the function according to one of the confirmed options.

As in step 480 of FIG. 3, the method-executing computer (i.e., by interface 101) detects one of the option-patterns and continues to start executing the pre-defined function (in step 490).

FIG. 4 illustrates the detection (here given as step 481) that also communicates which option was detected, and illustrates that the execution of the function (item 490 in general) can be differentiated according to the option:
- Function 490-L corresponds to the first option (e.g., left option, element 241 in FIG. 2).
- Function 490-R corresponds to the second option (e.g., right option, element 242 in FIG. 2).

In general, there can be N options, and the 1th, 2nd, ..., Nth option applies.

The mentioned variants for T_DELTA can be applied to different options. With the progress of time, the number of options (for that confirmation is possible) would thereby decrease. For some users, such an approach may by convenient because having less options may reduce the risk for errors.

### Cancellation

Although the cancellation-pattern does not have to be associated with an element on the screen, it is possible to show a cancellation-control element on the screen (similar to an "escape icon"). For some scenarios that might be convenient, but is not required.

### Function execution

Computer 100 can start executing the function as soon as it receives the input (cf. item 141 in FIG. 1). Some functions have an execution duration (i.e., from start to end) that is not noticeable for the user.

For example, the function to take over a character to a text is completed immediately once the user has confirmed (step 480) to take over the character.

Some functions can be executed independently from other activities. For example, the computer can execute the function to save data (to a storage device) in the background, while the computer can interact with the user for other topics.

The relatively short duration (or alternatively, the independence of function execution) calls for method repetitions.

But during function execution (following step 480), the user may have performed motion (even non-intentional motion) and the sensor (cf. 115 in FIG. 1) may have started monitoring already. (In implementations, the sensor monitors constantly, without interruption).

### Method repetitions

FIG. 5 illustrates the flow chart of the computer-implemented method of FIG. 3 with method repetitions in two alternatives. Implementing the alternatives is optional.

For example, as in FIG. 2, pointer 220 would have reached position x2, y2 just over function-control element 210, the operation state would have changed from state A to state B, the computer user would have received the confirmation from the user (cf. step 480), and the execution of the function would have started.

In test 510, the computer determines if the current pointer position (i.e., the position at step 490) matches the pointer position when the pointer stopped earlier (i.e., at step 425).

Test 510 results in the following alternatives:
- (first alternative) In case of no match (cf. in the figure the N-line to the left), method 400 would be repeated from step 410 (or optionally from step 420) at state A. The state transition (cf. FIG. 2) is from state C to state A.
- (second alternative) In case of a match (cf. in the figure the Y-line to the right), method 400 would be repeated from step 440 at state B. The second alternative bypasses some method steps, and the state transition is therefore from state C to state B (bypassing A).

Depending on the function, this approach is potentially advantageous. Some functions are usually not repeated immediately. The function to delete content from the recycle directory (trigger via the bin icon) would not have to be repeated (because the date would have been deleted). The function to add characters to a text is to be repeated for each character. To stay with the above-mentioned example for "WETTER", the computer adds "W" in a first function instance (original execution, no repetition yet), "E" in the second instance (first repetition), "T" in the third instance (second repetition), "T" in the fourth instance (third repetition), and so on.

When the user selects a different character, the pointer position has to change because different characters have different icons (i.e., virtual keys on the display). The method is repeated in the first alternative (N) for the second instance, the third instance, the fifth instance and so on. The method can be repeated in the second alternative (Y) for the fourth instance when the user confirms (step 480) the character "T" again.

It is noted that the method repetition in the second alternative (Y) is not mandatory: the user may perform motion again to re-select the character (i.e., first alternative). It is however time-saving (for the user) to simply confirm the character again.

The approach with the method repetition alternatives can be implemented with optional features, such as in the following:
- The activity "writing text" would allow the second alternative for a maximum number of function repetitions (e.g., one repetition TT, but not 3 repetitions for TTTT)
- The function "shut down" the computer would potentially not require a repetition (because the computer would be "off").
- For writing texts, offering the repetitions can depend on the language (e.g., texts in German with the second alternative, texts in English without alternatives).

Regarding the matching, tolerances can be allowed. For example, the position can be determined as the position in relation to a control element (e.g., an icon). A pointer still remains at the position of a virtual key (e.g., for the character "T") even if the pixel coordinates change by some pixels.

### Text entry approaches in comparison

FIG. 6 illustrates a time-diagram for the activity "writing a text" in a comparison between a traditional approach (left side, examples (1) and (2)) and with executing the method (right side, example (3)).

FIG. 6 shows the progress of time by a vertical down-going arrow. Horizontal dash-point lines indicate particular points in time. By way of example, the text should have the 6 characters "W", "E", "T", "T", "E", and "R".

At time-point t1, the computer has executed the function to add the character "W" to a text. At time-point t6 - different for examples (1), (2) and (3) - the computer has executed the function to add the characters "R" to the text.

The time interval between consecutive points in time is equal for examples (1) and (2) that correspond to a traditional approach with constant waiting time (or "dwell time"). Traditionally, the waiting time (the time between selecting and confirming) can be user-specific. In example (1), the waiting time is longer than in example (2).

The time interval between consecutive points in time is different for example (3) for that using the method (in repetitions) is shown. The horizontal lines correspond to option-control element 241 (cf. FIG. 2). Option-control element 241 shows the elapsed time (thin line, right side) and shows the remaining time (bold line, left side).

FIG. 6 shows a single option-control element (i.e., confirming is the only option, beside cancellation), as a progress bar that shortens over time. The lengths of elements 241 is assumed to be that when the computer detects the confirmation pattern (step 480, cf. FIG. 3), and executes the function (step 490).

At t1, the computer has taken over the first character "W" with a relatively long waiting time (i.e., element 241 is short for T_REMAIN). It has taken over "E" and "T" with approximately the same waiting time (same remaining length). For the second "T", the waiting time was relatively short (element 241 was still longer for T_REMAIN), for the character "E" the waiting time was relatively long as well, but for the last character "R" time-point t6(3) followed in relatively short time (element 241 longer).

In comparison, entering "WETTER" in example (1) with the longer waiting time took the longest overall time (cf. time-point t6(1) is the latest. In contrast, example (2) appears to be the fastest activities (t6(2) the earliest).

The application of method 400 in repetitions (with one by-pass from state C to state B, cf. FIG. 4, for "TT") is a compromise between two pre-set waiting times. The user has confirmed to enter "W", first "E", "T" and second "E" before time-out (cf. step 465) but has waited. In contrast, the user has confirmed to enter the second "T" and the "R" without much waiting.

In example (1), the user might lose overall time (through t6(1)). In example (2), the user might eventually introduce an error by entering a character that does not fit (e.g., WETRER) and might recognize that error at a later point in time (e.g., after t6(2). The correction takes time as well.

Using the approach with method 400 is contemplated to be a compromise that
- allows the user to shorten the confirmation so that T_DELTA can be set relatively long (i.e., even longer than in example (1)), and
- allows the user to enter text with less errors, or at least the probability to make errors is reduced.

### Discussion

As mentioned above, sensor 115 is located remotely from user 190, cf. FIG. 1. It is however possible to use a sensor by that the user coveys the intention by physically operating the sensor. Examples include pointing devices such as mouses, trackballs, touch panels, etc.

In such situations, the user would normally be able to perform selections and confirmations (e.g., mouse-clicks)

The N options can be associated with different time-intervals T_DELTA (in the above-mentioned variants). This differentiation can be advantageous because statistically some options are preferred over others. Further, the number of options to be confirmed would be reduced over time. That may reduce the error risk for some users.

If different time-intervals are applied (in the variants), step 440 presenting can start with differently sized options-control elements.

As in the flowchart, time-out does not mean confirmation.

### Positioning the pointer

FIG. 7 illustrates positioning a pointer on a display in two variants. The example of FIG. 2 symbolizes pointer 220 by an arrow. In implementations, the pointer is displayed by a different symbol (e.g., circle, short bar etc.). The pointer would move pixel-by-pixel for every monitored motion of the user. In alternative input schemes, the points would not move pixel-by-pixel, but would jump from a first function-control element to a second function-control element (i.e., from icon to icon).

The position of the pointer would have coordinates in a coarser granularity, for example, that identify the function-control element in rows and columns.

FIG. 7 illustrates a (much simplified) display keyboard with a QWER-row and with an ASDF-row. The other letters of the alphabet are left out for simplicity.

As illustrated on the left side, the user has selected the letter "A", and - upon detecting 425 the stop control pattern (cf. the method), the user-interface stops positioning the pointer on letter A and continues with state B (symbolized by an option-control element that gets smaller, cf. FIG. 2, but N = 1).

As illustrated on the right side, the selection technique is the well-known switch access scanning. The sensor (cf. 115 in FIG. 1) can be implemented by an electromechanical switch that is operated by the user. The user can navigate letter-by-letter (e.g., QWER ... to arrive at A), can navigate row-by-row and column-by-column (or vice versa, to arrive at A as well). The pointer is symbolized as highlighting with a square, with references 221-1 (over Q) and 221-2 (over A).

Upon detecting the stop pattern (cf. step 425), the user-interface continues with state B (again symbolized by the option control element that gets smaller). The user has selected the letter "A", and - upon detecting 425 the stop control pattern (cf. the method), the user-interface stops positioning the pointer on letter A and continues with state B (symbolized by an option-control element that gets smaller, cf. FIG. 2, but N = 1)

The skilled person can implement the switch according to the abilities of the user. The following is just a simplified example. The switch can be a biased switch with two operation modes: conductive and non-conductive. The user operates a handle (such as a push button) to a conductive position, and the switch remains conductive as long as the user keeps the handle in that conductive position. Once the user releases the handle, the switch returns to the non-conductive position (driven by a spring or the like).

User-interface 101 of computer 100 can monitor (step 410) the intentional motion of user 190 operating the switch handle, such as to keep the switch conductive. User-interface 101 can position (step 420) pointer on the display highlighting symbols QWER etc. (cf. the square symbol 221-1 over the symbol). Unter-interface 101 would move the highlighting from Q to W, from W to E and so on, also to move from P to A (next row).

When user releases the handle, user-interface 101 interprets that action as the pre-defined particular stop control pattern (cf. detecting 425) and stops (step 422) positioning the pointer (220-2 in FIG. 2, 221-2 in FIG. 7) at the current position on a particular function-control element (e.g., the symbol A) on the display and assumes the second state B.

Variations of such switch access scanning are possible. For example, the switch can be implemented by a key on a keyboard (e.g., the TAB-key, tabulator key). Multiple switches can be applied to let the user navigate in different directions (e.g., up or down a keyboard row; to go back by one symbol in a row, etc.)

Once the user-interface has entered state B, the method execution continues as explained above. A predefined waiting time (dwell time) is not required. For confirmation (or cancellation), a further switch can be used.

### Generic computer

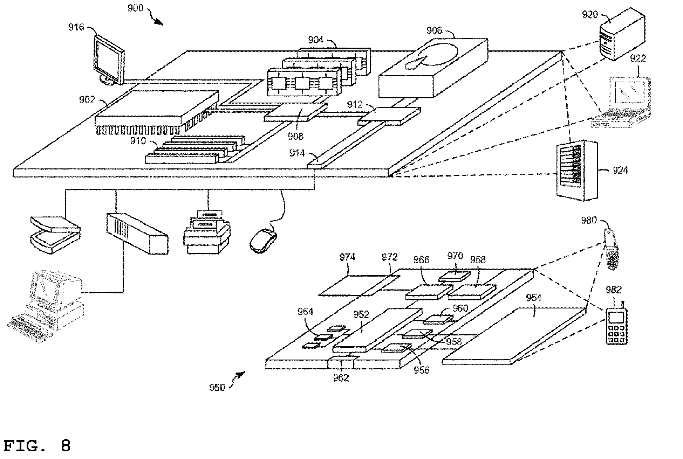

FIG. 8 illustrates a generic computer device 900 and a generic mobile computer device 950, which may be used with the techniques described here. Computing device 900 is intended to represent various forms of digital computers, such as laptops, desktops, workstations, personal digital assistants, servers, blade servers, mainframes, and other appropriate computers. Generic computer device may 900 correspond to the computer 100 of FIG. 1. Computing device 950 is intended to represent various forms of mobile devices, such as personal digital assistants, cellular telephones, smart phones, and other similar computing devices. For example, computing device 950 may include the data storage components and/or processing components of agent devices as shown in FIG. 1. The components shown here, their connections and relationships, and their functions, are meant to be exemplary only, and are not meant to limit implementations of the inventions described and/or claimed in this document.

Computing device 900 includes a processor 902, memory 904, a storage device 906, a high-speed interface 908 connecting to memory 904 and high-speed expansion ports 910, and a low speed interface 912 connecting to low speed bus 914 and storage device 906. Each of the components 902, 904, 906, 908, 910, and 912, are interconnected using various busses, and may be mounted on a common motherboard or in other manners as appropriate. The processor 902 can process instructions for execution within the computing device 900, including instructions stored in the memory 904 or on the storage device 906 to display graphical information for a GUI on an external input/output device, such as display 916 coupled to high speed interface 908. In other implementations, multiple processors and/or multiple buses may be used, as appropriate, along with multiple memories and types of memory. Also, multiple computing devices 900 may be connected, with each device providing portions of the necessary operations (e.g., as a server bank, a group of blade servers, or a multi-processor system).

The memory 904 stores information within the computing device 900. In one implementation, the memory 904 is a volatile memory unit or units. In another implementation, the memory 904 is a non-volatile memory unit or units. The memory 904 may also be another form of computer-readable medium, such as a magnetic or optical disk.

The storage device 906 is capable of providing mass storage for the computing device 900. In one implementation, the storage device 906 may be or contain a computer-readable medium, such as a floppy disk device, a hard disk device, an optical disk device, or a tape device, a flash memory or other similar solid state memory device, or an array of devices, including devices in a storage area network or other configurations. A computer program product can be tangibly embodied in an information carrier. The computer program product may also contain instructions that, when executed, perform one or more methods, such as those described above. The information carrier is a computer- or machine-readable medium, such as the memory 904, the storage device 906, or memory on processor 902.

The high speed controller 908 manages bandwidth-intensive operations for the computing device 900, while the low speed controller 912 manages lower bandwidth-intensive operations. Such allocation of functions is exemplary only. In one implementation, the high-speed controller 908 is coupled to memory 904, display 916 (e.g., through a graphics processor or accelerator), and to high-speed expansion ports 910, which may accept various expansion cards (not shown). In the implementation, low-speed controller 912 is coupled to storage device 906 and low-speed expansion port 914. The low-speed expansion port, which may include various communication ports (e.g., USB, Bluetooth, Ethernet, wireless Ethernet) may be coupled to one or more input/output devices, such as a keyboard, a pointing device, a scanner, or a networking device such as a switch or router, e.g., through a network adapter.

The computing device 900 may be implemented in a number of different forms, as shown in the figure. For example, it may be implemented as a standard server 920, or multiple times in a group of such servers. It may also be implemented as part of a rack server system 924. In addition, it may be implemented in a personal computer such as a laptop computer 922. Alternatively, components from computing device 900 may be combined with other components in a mobile device (not shown), such as device 950. Each of such devices may contain one or more of computing device 900, 950, and an entire system may be made up of multiple computing devices 900, 950 communicating with each other.

Computing device 950 includes a processor 952, memory 964, an input/output device such as a display 954, a communication interface 966, and a transceiver 968, among other components. The device 950 may also be provided with a storage device, such as a microdrive or other device, to provide additional storage. Each of the components 950, 952, 964, 954, 966, and 968, are interconnected using various buses, and several of the components may be mounted on a common motherboard or in other manners as appropriate.

The processor 952 can execute instructions within the computing device 950, including instructions stored in the memory 964. The processor may be implemented as a chipset of chips that include separate and multiple analog and digital processors. The processor may provide, for example, for coordination of the other components of the device 950, such as control of user-interfaces, applications run by device 950, and wireless communication by device 950.

Processor 952 may communicate with a user through control interface 958 and display interface 956 coupled to a display 954. The display 954 may be, for example, a TFT LCD (Thin-Film-Transistor Liquid Crystal Display) or an OLED (Organic Light Emitting Diode) display, or other appropriate display technology. The display interface 956 may comprise appropriate circuitry for driving the display 954 to present graphical and other information to a user. The control interface 958 may receive commands from a user and convert them for submission to the processor 952. In addition, an external interface 962 may be provide in communication with processor 952, so as to enable near area communication of device 950 with other devices. External interface 962 may provide, for example, for wired communication in some implementations, or for wireless communication in other implementations, and multiple interfaces may also be used.

The memory 964 stores information within the computing device 950. The memory 964 can be implemented as one or more of a computer-readable medium or media, a volatile memory unit or units, or a non-volatile memory unit or units. Expansion memory 984 may also be provided and connected to device 950 through expansion interface 982, which may include, for example, a SIMM (Single In Line Memory Module) card interface. Such expansion memory 984 may provide extra storage space for device 950, or may also store applications or other information for device 950. Specifically, expansion memory 984 may include instructions to carry out or supplement the processes described above, and may include secure information also. Thus, for example, expansion memory 984 may act as a security module for device 950, and may be programmed with instructions that permit secure use of device 950. In addition, secure applications may be provided via the SIMM cards, along with additional information, such as placing the identifying information on the SIMM card in a non-hackable manner.

The memory may include, for example, flash memory and/or NVRAM memory, as discussed below. In one implementation, a computer program product is tangibly embodied in an information carrier. The computer program product contains instructions that, when executed, perform one or more methods, such as those described above. The information carrier is a computer- or machine-readable medium, such as the memory 964, expansion memory 984, or memory on processor 952, that may be received, for example, over transceiver 968 or external interface 962.

Device 950 may communicate wirelessly through communication interface 966, which may include digital signal processing circuitry where necessary. Communication interface 966 may provide for communications under various modes or protocols, such as GSM voice calls, SMS, EMS, or MMS messaging, CDMA, TDMA, PDC, WCDMA, CDMA2000, or GPRS, among others. Such communication may occur, for example, through radio-frequency transceiver 968. In addition, short-range communication may occur, such as using a Bluetooth, WiFi, or other such transceiver (not shown). In addition, GPS (Global Positioning System) receiver module 980 may provide additional navigation- and location-related wireless data to device 950, which may be used as appropriate by applications running on device 950.

Device 950 may also communicate audibly using audio codec 960, which may receive spoken information from a user and convert it to usable digital information. Audio codec 960 may likewise generate audible sound for a user, such as through a speaker, e.g., in a handset of device 950. Such sound may include sound from voice telephone calls, may include recorded sound (e.g., voice messages, music files, etc.) and may also include sound generated by applications operating on device 950.

The computing device 950 may be implemented in a number of different forms, as shown in the figure. For example, it may be implemented as a cellular telephone 980. It may also be implemented as part of a smart phone 982, personal digital assistant, or other similar mobile device.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms "machine-readable medium" and "computer-readable medium" refer to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here can be implemented on a computer having a display device (e.g., a CRT (cathode ray tube) or LCD (liquid crystal display) monitor) for displaying information to the user and a keyboard and a pointing device (e.g., a mouse or a trackball) by which the user can provide input to the computer. Other kinds of devices can be used to provide for interaction with a user as well; for example, feedback provided to the user can be any form of sensory feedback (e.g., visual feedback, auditory feedback, or tactile feedback); and input from the user can be received in any form, including acoustic, speech, or tactile input.

The systems and techniques described here can be implemented in a computing device that includes a back end component (e.g., as a data server), or that includes a middleware component (e.g., an application server), or that includes a front end component (e.g., a client computer having a graphical user-interface or a Web browser through which a user can interact with an implementation of the systems and techniques described here), or any combination of such back end, middleware, or front end components. The components of the system can be interconnected by any form or medium of digital data communication (e.g., a communication network). Examples of communication networks include a local area network ("LAN"), a wide area network ("WAN"), and the Internet.

The computing device can include clients and servers. A client and server are generally remote from each other and typically interact through a communication network. The relationship of client and server arises by virtue of computer programs running on the respective computers and having a client-server relationship to each other.

A number of embodiments have been described. Nevertheless, it will be understood that various modifications may be made without departing from the spirit and scope of the invention.

In addition, the logic flows depicted in the figures do not require the particular order shown, or sequential order, to achieve desirable results. In addition, other steps may be provided, or steps may be eliminated, from the described flows, and other components may be added to, or removed from, the described systems. Accordingly, other embodiments are within the scope of the following claims.

### References

- 100: computer
- 101: user-interface
- 110: sensor module
- 115: sensor
- 120: interface module
- 130: display module
- 190: user
- 195: intentional motion of the user
- 200: display
- 210: function-control element
- 220: pointer (on the display)
- 221: pointer (implemented by highlighting control elements)
- 241, 242: option-control elements
- 400, 4xx: method, method steps
- 510: test
- A, B, C: operational states
- AB, BC, ...: state transitions
- t1, t6: time-points
- -1, -2: different consecutive points in time (in references)
- S1, S2: size of an option-control element
- T_...: time intervals (DELTA, ELAPSED, REMAIN)
- x2, y2: display coordinate of control element
- Y, N: "yes" and "no" in flow-charts

## Claims

1. Computer-implemented method (400) to operate a user-interface (101) of a computer (100), to receive an input (141) from a user (190), wherein the input (141) is related to a pre-defined function for the computer (100) to execute;
in a first state (A),
in first repetitions (401), monitoring (410) the intentional motion of at least one body part of the user (190) who performs intentional motion according to one or more control patterns of a first type, and positioning (420) a pointer (220-1) on a display (200, 200-A) of the computer (100) according to a detected control pattern;
upon detecting (425) a pre-defined particular stop control pattern of the first type, stop (422) positioning the pointer (220-2) at its current position (x2, y2) on a particular function-control element (210) on the display (200-A) and assuming a second state (B);
in the second state (B),
presenting (440) a set of N ≥ 1 option-control elements (241-1/241-2, 242-1/242-2) on the display (200-B-1, 200-B-2), and
in second repetitions (402), further monitoring (450) the intentional motion of the at least one body part of the user (190) who performs intentional motion according to two or more control patterns of a second type,
wherein the control patterns of the second type
comprise N ≥ 1 option-patterns and
comprise a cancellation-pattern, and
simultaneously with monitoring (450), indicating (460) to the user (190) that the time-out of a validity time interval (T_DELTA) is approaching;
upon detecting (470) the cancelation-pattern or upon detecting time-out (465), returning (403) to the first state (A),
wherein the second repetitions (402) stop upon detecting (480) one of the option-patterns, with starting (490) to execute the pre-defined function.

2. Method (400) according to claim 1, wherein the computer (100) executes monitoring (410) and further monitoring (450) by monitoring gestures of the user (190) that the user performs by moving the head, moving the eyes, or moving the nose, or moving other parts of the face.

3. Method (400) according to claims 1 or 2, wherein the computer (100) executes at least one of the monitoring steps (410, 450) by processing signals from a sensor (115), in accordance with any of the following:
(i) monitoring motion of the head by a camera sensor and image processing of the nose area of the head;
(ii) image processing the movement of the head or image processing individual facial features;
(iii) monitoring motion of the eyes by the camera sensor and image processing of the image of the eyes;
(iv) monitoring motion of the head by an accelerometer sensor; and
(v) monitoring motion of a body part that operates a switch sensor;
wherein positioning (420) the pointer (220-1) on the display is selected from pixel-by-pixel positioning, and icon-by-icon positioning.

4. Method (400) according to any of claims 1 to 3, wherein in the second state (B), the computer (100) is indicating (460) that the time-out is approaching by changing the optical appearance of the N option-control elements (241-1/241-2, 242-1/242-2) on the display (200-B-1/200-B-2).

5. Method (400) according to claim 4, wherein the optical appearance of the N option-control elements (241-1/241-2, 242-1/242-2) is related to the remaining time (T_REMAIN) such that the size of the option-control elements on the display is being changed.

6. Method (400) according to claim 5, wherein changing the appearance of the N option-control elements (241, 242) comprises any of the following: gradually changing the size by reducing the size, gradually changing the color, and gradually changing the brightness.

7. Method (400) according to any of claims 1 to 6, wherein in the second state (B), the computer (100) is indicating (460) that the time-out is approaching by providing an acoustical signal to the user (190), wherein with the process of time, the acoustical signal changes selected from the following: a signal that changes its audible frequency (pitch), and a signal with two pulses that change a pause time between the pulses.

8. Method (400) according to any of claims 1 to 7, wherein upon detecting a confirmation pattern, the computer is executing (490) the pre-defined function according to the particular option-patterns that has been detected.

9. Method (400) according to claim 8, wherein for N = 2, performing the pre-defined function (490) has its equivalent to left-side mouse-key and right-side-mouse-key operations.

10. Method (400) according to any of claims 1 to 9, wherein the validity time interval (T_DELTA) has N or less variants, wherein indicating (460) that the time-out is approaching is executed separately for the variants and wherein upon reaching a time-out for a particular variant: the computer stops presenting (440) the control element for the particular variant but continues with further monitoring (450) and indicating (460) the remaining time for the other variants.

11. Method (400) according to any of claims 1 to 10, wherein the execution of the method (400) is repeated conditionally (510) as follows:
if the pointer (220-2) remains at the current position (x2, y2) on the particular function-control element (210) on the display (200-A), continuing in the second state (B) with further monitoring (440), or
else continuing in the first state (A) with monitoring (410).

12. Method (400) according to any of claims 1 to 11, wherein in repetitions of the method (400), the option-control elements are provided at a same location on the display irrespective of the pointer (220-2).

13. Method (400) according to any of claims 1 to 12, wherein in the first state, monitoring (410) the motion of the user (190) comprises evaluating signals from a pointing device that is moved in physical contact by the user (190).

14. A computer program product that - when loaded into a memory of a computer and being executed by at least one processor of the computer - causes the computer to execute the steps of the computer-implemented method according to any of claims 1 to 13.

15. Computer (100) having a user-interface that is adapted to receive an input (141) from a user (190), wherein the input (141) is related to a pre-defined function for the computer (100) to execute, the computer (100) being adapted to execute the method steps of the computer-implemented method according to any of claims 1 to 13.
